# EUROPEAN PATENT APPLICATION

(11) **EP 4 657 324 A1**
(43) Date of publication of application: **03.12.2025**
(21) Application number: 25179985.4
(22) Date of filing: 30.05.2025
(51) Int. Cl.: G06N 3/048, G06N 3/09, G06N 3/0985, G06N 5/045

(54) **SYSTEMS AND METHODS FOR DEFINING CONFIDENCE IN DEEP LEARNING MODEL PREDICTION**

(30) Priority: 29.05.2024 US 202463652949 P
(71) Applicant: Plus One Robotics, Inc., San Antonio, TX 78226 (US)
(72) Inventor: Grollman, Daniel, San Antonio, 78226 (US); Majumdar, Abhijit, San Antonio, 78226 (US)
(74) Representative: Cabinet Novitech

(57) **Abstract**

The invention relates to a technique for improving confidence estimates associated with neural networks. The technique involves computing neuron activation statistics during training, evaluating neuron activations during inferencing and determining how the activations compare with the previously computed statistics (e.g. whether prediction activations are within the bounds of the training activation statistics). The comparison may be used to compute a confidence value for the neural network.

## Description

### CROSS-REFERENCE TO RELATED APPLICATIONS

This application claims the benefit of U.S. Provisional Application 63/652,949, filed May 29, 2024, titled "SYSTEM AND METHOD FOR DEFINING CONFIDENCE IN DEEP LEARNING MODEL PREDICTION,". The contents of the above identified applications are incorporated herein by reference in their entirety.

### BACKGROUND

### Field of the Art

This invention relates to the field of neural networks, in particular evaluating neural network output.

### Discussion of the State of the Art

The problem at hand deals with the inherent complexity of Deep Learning Neural Networks (DLNNs). DLNNs are composed of hundreds of millions of parameters that connect artificial neurons, which are typically assembled into layers in relation to the flow of data. These neurons aggregate several inputs from previous layers and combine them using configurable parameters, or weights. The final output, which can be nonlinear, is generated by adding an activation function to these neurons. While this complexity allows for diverse learning capabilities, it also reduces the explainability of the networks.

In a typical neural network, a score value is generated in addition to an output prediction. This value represents the model's own prediction of its accuracy, commonly referred to as its confidence. However, this value is also generated by the output of the network, meaning it is learned by the network itself, and thus susceptible to the same sorts of errors as the network prediction, and, in particular, may perform poorly on the same inputs that the model as a whole performs poorly on, leading to inaccurate self-estimates of performance or confidence. In instances where the confidence is not reflective of the prediction being made, it can result in improper application of the learned model.

Attempts to solve this problem have included modeling the area of expertise for the network as a form of out-of-distribution detection. Considering the case of images, where the input is typically a 3-channel image (RGB - Red, Green, Blue) of a certain size, one could record the distribution of training data for each pixel, and then compare new inputs to determine the similarity of the new sample to the training data. However, this method only considers the input space of the model, which may not accurately reflect the learned model's ability to generalize over different inputs..

Another approach has been to measure data similarity in an embedding space. This method assumes that a model's trained weights can accurately represent the input data and make inferences. The feature space in the hidden layers is then inferred as a lower dimension representation of the input data. This can be used to apply less complex and differentiable similarity metrics to determine the relation between data points. However, this method relies heavily on having a well-trained model and the ability to condense the input feature space into a lower dimensional representational feature space. However, by construction, areas of the input space far from the training data may not be well represented in the embedding space. Thus, this is not always possible or accurate, making this solution suboptimal.

Another class of solutions aims to directly improve the predicted score, by including additional computational steps during training. For example, additional, never-before-seen data can be used during training to further train just the score prediction, bringing it more in line with actual model performance. However, this approach adds computation and time demands to the training process.

### SUMMARY

The invention relates to a computing system for evaluating model performance based on activation space parameters according to claim 1.

The invention also relates to a computer implemented method for evaluating model performance based on activation space parameters according to claim 10.

According to further embodiments which can be considered alone in any possible combination:
- recording a training activation space during the training comprises recording activation data associated with each neuron of the neural network; and/or
- recording an output activation space comprises recording activation data associated with each neuron of the neural network; and/or
- the statistical representation of the training activation space comprises a distribution type indicator, an average, a minimum, a maximum, a range, a variance, and/or a standard deviation; and/or
- the statistical representation of the output activation space comprises a distribution type indicator, an average, a minimum, a maximum, a range, a variance, and/or a standard deviation; and/or
- modeling the training activation space parameters is based on an activation function used for each of the plurality of neurons; and/or
- modeling the output activation space parameters is based on an activation function used for each of the plurality of neurons; and/or
- the training activation space parameters define expected activation space bounds; and/or
- determining a likelihood of achieving the output activation space parameters comprises determining the extent to which each neuron output is out of bounds when the output is not within the expected bounds; and/or
- computing a confidence metric comprises evaluating the extent to which the output activation space falls within the expected activation bounds and/or exceeds the expected activation bounds; and/or
- triggering a secondary processing of the input data and/or model output comprises rejecting the model output, requesting another output from the model, applying a secondary inferencing model, and/or requesting intervention from an external source; and/or
- the method further comprises recording the data that failed to satisfy the threshold; and/or
- the method further comprises using the recorded data that failed to satisfy the threshold in updating training of the neural network and/or in training a new neural network.

The invention provides a novel technique for determining the confidence of predictions made by Deep Learning Neural Networks (DLNNs). This technique involves treating the entire activation state of the network as a multivariate sample, and determining if a novel input produces an activation pattern that is out of distribution from that encountered during training. As the neural network is trained, a measurement log is created that records the output distribution of all of the neurons when the entire training dataset is parsed through the network. This log is then used as a reference during inference to determine if a prediction made on new data falls within the training data domain. Because the necessary information is obtained during training with no additional steps required, there is minimal impact on training time in order to employ this technique.

The invention offers several benefits. Firstly, it provides a more robust measure of prediction confidence than previous methods, which relied on the output of the network or the distribution of training data in the input or embedding space. Secondly, it does not rely on the input space or variations in raw input value, or the identification of a specific embedding layer, and instead compares the distribution of activations for all of the neurons as a whole. This allows for a more precise and reliable comparison during inference.

The invention is an improvement over prior solutions in several ways. Unlike the embedding space approach, which interprets the feature space into lower dimensions and is therefore an approximation, this technique measures and compares the distribution of activations directly. Additionally, because the distribution of activations is calculated using the training data, it accurately represents the behavior of the network when parsing that data. This invention also makes the assumption that confidence falls off outside the support of the training data, and thus that the network should be more confident during interpolation rather than extrapolation, which correctly biases the production system to be cautious.

In conclusion, this invention provides a more holistic and robust, and less heuristic method for determining the confidence of inferences made by DLNNs, offering significant improvements over previous solutions.

The invention further relates to a non-transitory computer readable medium according to claim 15.

### BRIEF DESCRIPTION OF THE DRAWINGS

The accompanying drawings illustrate several embodiments and, together with the description, serve to explain the principles of the invention according to the embodiments. It will be appreciated by one skilled in the art that the particular arrangements illustrated in the drawings are merely exemplary and are not to be considered as limiting of the scope of the invention or the claims herein in any way.
**FIG. 1** illustrates a high-level system for systems and methods for defining confidence in deep learning model prediction in accordance with an exemplary embodiment of the invention.
**FIG. 2** illustrates a detailed system for systems and methods for defining confidence in deep learning model prediction in accordance with an exemplary embodiment of the present invention.
**FIG. 3** illustrates an exemplary process for systems and methods for defining confidence in deep learning model prediction according to one embodiment of the invention.
**FIG. 4** illustrates one embodiment of the computing architecture that supports an embodiment of the inventive disclosure.
**FIG. 5** illustrates components of a system architecture that supports an embodiment of the inventive disclosure.
**FIG. 6** illustrates components of a computing device that supports an embodiment of the inventive disclosure.
**FIG. 7** illustrates components of a computing device that supports an embodiment of the inventive disclosure.

### DETAILED DESCRIPTION

One or more different embodiments may be described in the present application. Further, for one or more of the embodiments described herein, numerous alternative arrangements may be described; it should be appreciated that these are presented for illustrative purposes only and are not limiting of the embodiments contained herein or the claims presented herein in any way. One or more of the arrangements may be widely applicable to numerous embodiments, as may be readily apparent from the disclosure. In general, arrangements are described in sufficient detail to enable those skilled in the art to practice one or more of the embodiments, and it should be appreciated that other arrangements may be utilized and that structural, logical, software, electrical and other changes may be made without departing from the scope of the embodiments. Particular features of one or more of the embodiments described herein may be described with reference to one or more particular embodiments or figures that form a part of the present disclosure, and in which are shown, by way of illustration, specific arrangements of one or more of the aspects. It should be appreciated, however, that such features are not limited to usage in the one or more particular embodiments or figures with reference to which they are described. The present disclosure is neither a literal description of all arrangements of one or more of the embodiments nor a listing of features of one or more of the embodiments that must be present in all arrangements.

Headings of sections provided in this patent application and the title of this patent application are for convenience only and are not to be taken as limiting the disclosure in any way.

Devices that are in communication with each other need not be in continuous communication with each other, unless expressly specified otherwise. In addition, devices that are in communication with each other may communicate directly or indirectly through one or more communication means or intermediaries, logical or physical.

A description of an aspect with several components in communication with each other does not imply that all such components are required. To the contrary, a variety of optional components may be described to illustrate a wide variety of possible embodiments and in order to more fully illustrate one or more embodiments. Similarly, although process steps, method steps, algorithms or the like may be described in a sequential order, such processes, methods and algorithms may generally be configured to work in alternate orders, unless specifically stated to the contrary. In other words, any sequence or order of steps that may be described in this patent application does not, in and of itself, indicate a requirement that the steps be performed in that order. The steps of described processes may be performed in any order practical. Further, some steps may be performed simultaneously despite being described or implied as occurring non-simultaneously (e.g., because one step is described after the other step). Moreover, the illustration of a process by its depiction in a drawing does not imply that the illustrated process is exclusive of other variations and modifications thereto, does not imply that the illustrated process or any of its steps are necessary to one or more of the embodiments, and does not imply that the illustrated process is preferred. Also, steps are generally described once per aspect, but this does not mean they must occur once, or that they may only occur once each time a process, method, or algorithm is carried out or executed. Some steps may be omitted in some embodiments or some occurrences, or some steps may be executed more than once in a given aspect or occurrence.

When a single device or article is described herein, it will be readily apparent that more than one device or article may be used in place of a single device or article. Similarly, where more than one device or article is described herein, it will be readily apparent that a single device or article may be used in place of the more than one device or article.

The functionality or the features of a device may be alternatively embodied by one or more other devices that are not explicitly described as having such functionality or features. Thus, other embodiments need not include the device itself.

Techniques and mechanisms described or referenced herein will sometimes be described in singular form for clarity. However, it should be appreciated that particular embodiments may include multiple iterations of a technique or multiple instantiations of a mechanism unless noted otherwise. Process descriptions or blocks in figures should be understood as representing modules, segments, or portions of code which include one or more executable instructions for implementing specific logical functions or steps in the process. Alternate implementations are included within the scope of various embodiments in which, for example, functions may be executed out of order from that shown or discussed, including substantially concurrently or in reverse order, depending on the functionality involved, as would be understood by those having ordinary skill in the art.

The detailed description set forth herein in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

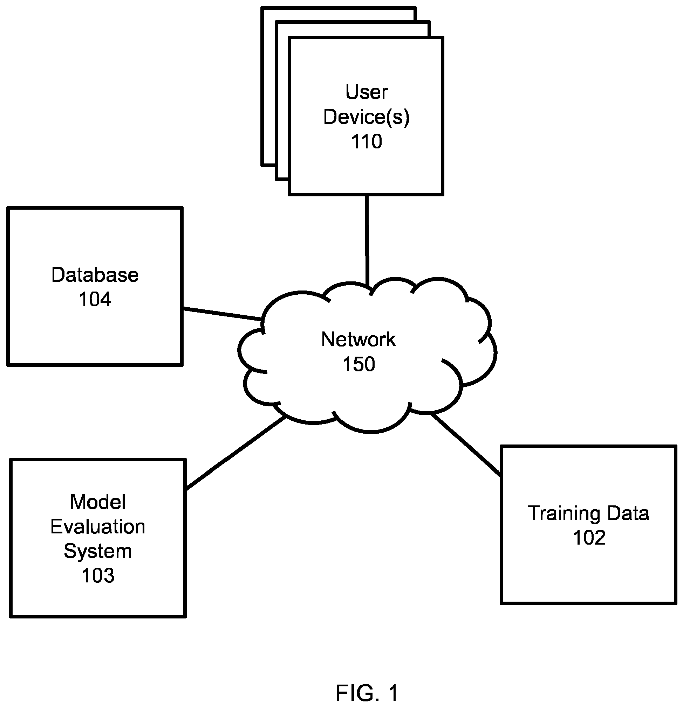

**FIG. 1** illustrates an exemplary embodiment of systems and methods for defining confidence in deep learning model inferencing according to one embodiment. The system includes , user device(s) 110, and a network 150 over which the various systems communicate and interact. The various components described herein are exemplary and for illustration purposes only and any combination or subcombination of the various components may be used as would be apparent to one of ordinary skill in the art. The system may be reorganized or consolidated, as understood by a person of ordinary skill in the art, to perform the same tasks on one or more other servers or computing devices without departing from the scope of the invention.

In one embodiment, the model evaluation system 103 is a component designed to train a neural network using a set of training data. This system is capable of analyzing at least a portion of neuron activations associated with the training process. The model evaluation system 103 operates by first receiving and processing a set of training data. During this process, the system activates the neurons in the neural network based on the input data. The system then analyzes these neuron activations, which involve capturing the output values of each neuron as the training data is parsed through the network. Next, the model evaluation system 103 computes statistics on these neuron activations. These statistics may include measures such as the range, mean, or standard deviation of the neuron activations. The computed statistics provide a quantitative understanding of the neuron's behavior during the training phase, which is used to define the distribution of neural activity. In one embodiment, this distribution could be represented as the upper and lower bounds of each neuron in the network. In another embodiment, the distribution could be represented as a multivariate Gaussian of dimensionality equal to the number of neurons in the network. It will be obvious to those skilled in the art that many different distributional representations are possible without departing from the spirit of this invention..

Once the neural network has been trained and the neuron activation statistics computed, the model evaluation system 103 uses these statistics to compute a confidence level when the trained neural network is applied to real data for inferencing purposes. This involves comparing the output values of the neurons, when the trained model is applied to new data, with the neuron activation statistics. In one embodiment, a confidence value may be derived by computing a likelihood of the activation pattern being generated by the stored activation distribution. In one embodiment, a binary confidence metric may be used (e.g. confident/not confident) based on neuron output values. For example, if the neuron output values fall within the bounds defined by the statistics, the prediction is considered to be within the domain of the training data, and a high confidence level is assigned. Conversely, if the neuron output values fall outside the bounds, a lower confidence level is assigned.

Alternative embodiments of the model evaluation system 103 may use different methods to compute the confidence level. For example, in one alternative, the system may aggregate all the out-of-bound neurons to find a singular value to judge the confidence of the prediction. This could involve providing a ratio of the number of neurons that were within bounds to the total number of neurons, or using the model parameters to form a linear relation of the neuron outputs to the confidence of the final output.

In one embodiment, database 104 serves as a storage system for data related to neuron activations and model weights associated with the training of a neural network. Database 104 is responsible for storing and managing data that is crucial to the operation of a neural network. This data includes neuron activations, which are the output values of neurons when the training data is parsed through the network, and model weights, which are the parameters that have been adjusted during the training process to minimize the difference between the network's output and the desired output. The operation of database 104 involves receiving and storing the neuron activation data and model weights data generated during the training of the neural network and/or during inferencing associated with processing input data using the trained model. This data is typically organized and indexed in a manner that allows for efficient retrieval and analysis. When the trained model is applied to new data for prediction or inference purposes, the neuron activation data and model weights data stored in database 104 can be retrieved and used to compute a confidence level for the prediction.

Alternative embodiments of database 104 may involve different types of database systems or different methods of organizing and retrieving the data. For example, database 104 could be implemented as a relational database, a NoSQL database, or a distributed database, depending on the specific requirements of the neural network and the volume and complexity of the data. Additionally, the data retrieval methods could involve complex queries, machine learning algorithms, or other data analysis techniques, depending on the specific needs of the neural network and the nature of the prediction task.

In one embodiment, the system comprises training data 102, which is used for training a model or neural network. The training data 102 is a collection of data points that are used to adjust the parameters of a model or neural network. These data points typically consist of input-output pairs, where the input is a set of features or variables, and the output is the corresponding target or label. In operation, the training data 102 is fed into the model or neural network. The model or neural network uses the input features to predict the output, and then adjusts its parameters based on the difference between the predicted output and the actual output. This process is repeated iteratively until the model or neural network is able to predict the output accurately, indicating that it has been trained.

Alternative embodiments of the training data 102 may involve different types of data or different methods of using the data. For example, the training data could be numerical, categorical, text, image, audio, video, or other types of data, depending on the specific requirements of the model or neural network. The training data could also be used in different ways, such as for supervised learning, unsupervised learning, reinforcement learning, or other types of machine learning, depending on the specific needs of the model or neural network.

In one embodiment, the system comprises user device(s) 110, which can provide real world data for analysis by a model and data for training a model. The user device(s) 110 serve as a source of data. This data can be collected from various applications or sensors on the device, and can include a wide range of information, such as user interactions, sensor readings, or other types of real world data. In operation, the user device(s) 110 collect data and send it to a model for analysis or training. The model uses this data to make predictions or to adjust its parameters during the training process. The predictions made by the model can then be used to provide insights, make decisions, or perform other tasks.

Alternative embodiments of the user device(s) 110 may involve different types of devices or different methods of collecting and sending data. For example, the user device(s) could be smartphones, tablets, computers, wearable devices, IoT devices, digital cameras, or other types of devices, depending on the specific requirements of the model. The user device(s) could also collect and send data in different ways, such as through wired or wireless connections, using different protocols or formats, or at different intervals, depending on the specific needs of the model.

User device(s) **110** include, generally, a computer or computing device including functionality for communicating (e.g., remotely) over a network **150.** Data may be collected from user devices **110,** and data requests may be initiated from each user device 110. User device(s) **110** may be a server, a desktop computer, a laptop computer, personal digital assistant (PDA), an in- or out-of-car navigation system, a smart phone or other cellular or mobile phone, or mobile gaming device, among other suitable computing devices. User devices **110** may execute one or more applications, such as a web browser (e.g., Microsoft Windows Internet Explorer, Mozilla Firefox, Apple Safari, Google Chrome, and Opera, etc.), or a dedicated application to submit user data, or to make prediction queries over a network **150.**

In particular embodiments, each user device **110** may be an electronic device including hardware, software, or embedded logic components or a combination of two or more such components and capable of carrying out the appropriate functions implemented or supported by the user device **110.** For example and without limitation, a user device **110** may be a desktop computer system, a notebook computer system, a netbook computer system, a handheld electronic device, or a mobile telephone. The present disclosure contemplates any user device **110.** A user device **110** may enable a network user at the user device **110** to access network **150.** A user device **110** may enable its user to communicate with other users at other user devices **110.**

A user device **110** may have a web browser, such as MICROSOFT INTERNET EXPLORER, GOOGLE CHROME or MOZILLA FIREFOX, and may have one or more add-ons, plug-ins, or other extensions, such as TOOLBAR or YAHOO TOOLBAR. A user device 110 may enable a user to enter a Uniform Resource Locator (URL) or other address directing the web browser to a server, and the web browser may generate a Hyper Text Transfer Protocol (HTTP) request and communicate the HTTP request to server. The server may accept the HTTP request and communicate to the user device **110** one or more Hyper Text Markup Language (HTML) files responsive to the HTTP request. The user device **110** may render a web page based on the HTML files from server for presentation to the user. The present disclosure contemplates any suitable web page files. As an example and not by way of limitation, web pages may render from HTML files, Extensible Hyper Text Markup Language (XHTML) files, or Extensible Markup Language (XML) files, according to particular needs. Such pages may also execute scripts such as, for example and without limitation, those written in JAVASCRIPT, JAVA, MICROSOFT SILVERLIGHT, combinations of markup language and scripts such as AJAX (Asynchronous JAVASCRIPT and XML), and the like. Herein, reference to a web page encompasses one or more corresponding web page files (which a browser may use to render the web page) and vice versa, where appropriate.

The user device **110** may also include an application that is loaded onto the user device **110.** The application obtains data from the network **150** and displays it to the user within the application interface.

Exemplary user devices are illustrated in some of the subsequent figures provided herein. This disclosure contemplates any suitable number of user devices, including computing systems taking any suitable physical form. As example and not by way of limitation, computing systems may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, or a combination of two or more of these. Where appropriate, the computing system may include one or more computer systems; be unitary or distributed; span multiple locations; span multiple machines; or reside in a cloud, which may include one or more cloud components in one or more networks. Where appropriate, one or more computing systems may perform without substantial spatial or temporal limitation one or more steps of one or more methods described or illustrated herein. As an example, and not by way of limitation, one or more computing systems may perform in real time or in batch mode one or more steps of one or more methods described or illustrated herein. One or more computing system may perform at different times or at different locations one or more steps of one or more methods described or illustrated herein, where appropriate.

Network cloud **150** generally represents a network or collection of networks (such as the Internet or a corporate intranet, or a combination of both) over which the various components illustrated in **FIG. 1** (including other components that may be necessary to execute the system described herein, as would be readily understood to a person of ordinary skill in the art). In particular embodiments, network **150** is an intranet, an extranet, a virtual private network (VPN), a local area network (LAN), a wireless LAN (WLAN), a wide area network (WAN), a metropolitan area network (MAN), a portion of the Internet, or another network **150** or a combination of two or more such networks 150. One or more links connect the systems and databases described herein to the network **150.** In particular embodiments, one or more links each includes one or more wired, wireless, or optical links. In particular embodiments, one or more links each includes an intranet, an extranet, a VPN, a LAN, a WLAN, a WAN, a MAN, a portion of the Internet, or another link or a combination of two or more such links. The present disclosure contemplates any suitable network **150,** and any suitable link for connecting the various systems and databases described herein.

The network **150** connects the various systems and computing devices described or referenced herein. In particular embodiments, network **150** is an intranet, an extranet, a virtual private network (VPN), a local area network (LAN), a wireless LAN (WLAN), a wide area network (WAN), a metropolitan area network (MAN), a portion of the Internet, or another network 421 or a combination of two or more such networks **150.** The present disclosure contemplates any suitable network **150.**

One or more links couple one or more systems, engines or devices to the network **150.** In particular embodiments, one or more links each includes one or more wired, wireless, or optical links. In particular embodiments, one or more links each includes an intranet, an extranet, a VPN, a LAN, a WLAN, a WAN, a MAN, a portion of the Internet, or another link or a combination of two or more such links. The present disclosure contemplates any suitable links coupling one or more systems, engines or devices to the network **150.**

In particular embodiments, each system or engine may be a unitary server or may be a distributed server spanning multiple computers or multiple datacenters. Systems, engines, or modules may be of various types, such as, for example and without limitation, web server, news server, mail server, message server, advertising server, file server, application server, exchange server, database server, or proxy server. In particular embodiments, each system, engine or module may include hardware, software, or embedded logic components or a combination of two or more such components for carrying out the appropriate functionalities implemented or supported by their respective servers. For example, a web server is generally capable of hosting websites containing web pages or particular elements of web pages. More specifically, a web server may host HTML files or other file types, or may dynamically create or constitute files upon a request, and communicate them to client/user devices or other devices in response to HTTP or other requests from client devices or other devices. A mail server is generally capable of providing electronic mail services to various client devices or other devices. A database server is generally capable of providing an interface for managing data stored in one or more data stores.

In particular embodiments, one or more data storages may be communicatively linked to one or more servers via one or more links. In particular embodiments, data storages may be used to store various types of information. In particular embodiments, the information stored in data storages may be organized according to specific data structures. In particular embodiments, each data storage may be a relational database. Particular embodiments may provide interfaces that enable servers or clients to manage, e.g., retrieve, modify, add, or delete, the information stored in data storage.

The system may also contain other subsystems and databases, which are not illustrated in **FIG. 1****,** but would be readily apparent to a person of ordinary skill in the art. For example, the system may include databases for storing data, storing features, storing outcomes (training sets), and storing models. Other databases and systems may be added or subtracted, as would be readily understood by a person of ordinary skill in the art, without departing from the scope of the invention.

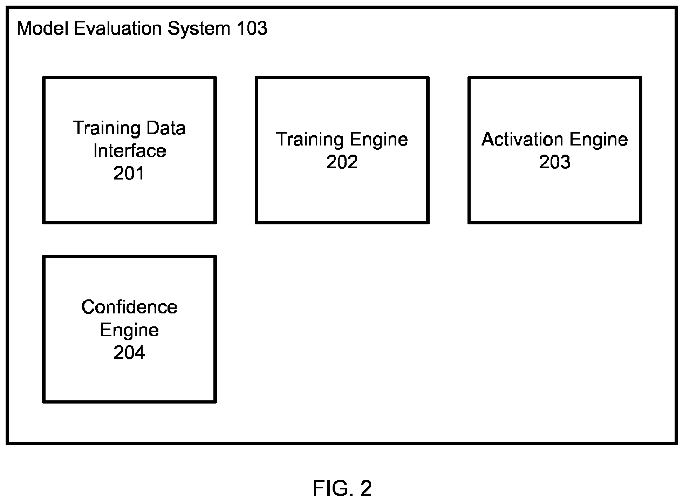

**FIG. 2** illustrates an exemplary embodiment of the systems and methods for defining confidence in deep learning model prediction. FIG. 2 illustrates an exemplary model evaluation system 103 according to an embodiment of the invention. Model evaluation system 103 comprises training data interface 201, training engine 202, activation engine 203, and confidence engine 204.. The various components described herein are exemplary and for illustration purposes only and any combination or subcombination of the various components may be used as would be apparent to one of ordinary skill in the art. Other systems, interfaces, modules, engines, databases, and the like, may be used, as would be readily understood by a person of ordinary skill in the art, without departing from the scope of the invention. Any system, interface, module, engine, database, and the like may be divided into a plurality of such elements for achieving the same function without departing from the scope of the invention. Any system, interface, module, engine, database, and the like may be combined or consolidated into fewer of such elements for achieving the same function without departing from the scope of the invention. All functions of the components discussed herein may be initiated manually or may be automatically initiated when the criteria necessary to trigger action have been met.

In one embodiment, the training data interface 201 is a subsystem designed to receive training data for the purpose of training a model or neural network. The training data interface serves as the point of entry for the training data into the neural network. It is capable of receiving various types of training data, which can be used to train the neural network to perform a specific task or to make predictions. The operation of the training data interface involves receiving the training data from a source, such as a database like training data 102, and passing this data to the neural network for processing. The interface can receive training data over time, as new data becomes available. This can include data generated by user devices, which can be collected and sent to the interface in real-time or in batches. Training data interface 102 may receive new training data over time such as training data associated with trained model output identified by the confidence engine as failing to satisfy confidence criteria (e.g. a threshold).

Alternative embodiments of the training data interface may involve different methods of receiving and processing the training data. For example, the interface could be designed to receive data in different formats, such as structured data, unstructured data, or semi-structured data, depending on the requirements of the neural network. The interface could also be designed to preprocess the data before passing it to the neural network, such as by cleaning the data, normalizing the data, or performing feature extraction. Additionally, the interface could be designed to handle data from multiple sources, such as multiple databases or multiple user devices, and to combine or integrate this data in a manner that is suitable for the neural network.

In one embodiment, training engine 202 is a subsystem designed to train a model or neural network using training data. Training engine 202 operates by implementing various machine learning algorithms to adjust the parameters of the model or neural network based on the training data. This involves using at least a subset of the obtained training data to iteratively adjust the model parameters until the output of the model aligns with the desired output. During the training process, training engine 202 may record, store, and/or provide information associated with the activation of neurons. This includes capturing the output values of all or a subset of neurons as the training data is parsed through the network. This neuron activation information can be used to understand the behavior of the neurons during the training process, and to compute statistics that can be used to compute a confidence level when the trained model is applied to new data for prediction or inference purposes. The training engine 202 is operable to update or retrain a neural network(s) over time as necessary (e.g. using data identified by the confidence engine as failing to satisfy confidence criteria).

Alternative embodiments of training engine 202 may implement different machine learning algorithms or different methods of recording, storing, and providing neuron activation information. For example, the training engine could implement supervised learning algorithms, unsupervised learning algorithms, reinforcement learning algorithms, or a combination of these, depending on the specific requirements of the neural network and the nature of the training data. The training engine could also record, store, and provide neuron activation information in different ways, such as by storing the information in a database, providing the information as a data stream, or visualizing the information in a graphical user interface, depending on the specific needs of the neural network and the prediction task.

In one embodiment, activation engine 203 is a subsystem designed to handle activation information associated with the training process of a neural network and model neuron activation spaces. Activation engine 203 functions by receiving activation information, which may comprise the output values of neurons when the training data is parsed through the network. It then computes analytics based on this information. These analytics may include a statistical representation or statistical characteristics of the neuron activation space, such as, but not limited to a distribution type indicator, an average, a minimum, a maximum, a range, a variance, and/or a standard deviation. In operation, activation engine 203 receives the activation information from the training engine or another source, and then applies statistical methods to compute the analytics. These analytics can provide insights into the behavior of the neurons during the training process, and can be used to evaluate the performance of the neural network, to identify potential issues or anomalies, and to optimize the training process.

Alternative embodiments of activation engine 203 may involve different methods of receiving activation information, different statistical methods for computing the analytics, or different ways of using the analytics. For example, activation engine 203 could be designed to receive activation information in different formats or from different sources, depending on the specific requirements of the neural network. The engine could also be designed to compute different types of analytics, such as mean, median, mode, variance, skewness, kurtosis, or other statistical characteristics, depending on the specific needs of the neural network. Furthermore, the analytics could be used in different ways, such as for model validation, model selection, hyperparameter tuning, or other tasks related to the training and operation of the neural network.

Confidence engine 204 is a component of the system that computes a confidence metric associated with the predictions made by the trained model. The confidence metric is calculated by comparing the neuron activation characteristics observed during model implementation, such as prediction or inference, with the neuron activation statistics collected during the training process. To obtain the neuron activation statistics, a portion or the entire training dataset is parsed through the trained model, and the entirety of output values for each neuron in the network is measured. These values are then stored for reference (e.g. in a database, lookup table, etc.) of each neuron's activation values and summary statistics (bounds, averages, etc) computed. These statistics represent the domain of data that is relevant to the trained model.

When new data is input into the trained network during model implementation, the confidence engine 204 compares the output values of the network ensemble against the previously computed statistics. In one aspect, confidence engine 204 may compute a likelihood of the activation pattern being produced by the distribution estimated from the training data. In one aspect, confidence engine 204 may evaluate if one or more neurons produce output values that fall outside their previously stored ranges, which may indicate that the input data is not within the domain represented by the training data. The confidence engine 204 then aggregates the information about out-of-bound neurons to calculate a single confidence value for the prediction. This can be accomplished using various methods. One approach is to calculate the ratio of neurons whose output values fall within their respective bounds to the total number of neurons in the network. Another method involves using the trained model parameters, such as weights, to establish a linear relationship between the neuron outputs and the confidence of the final output.

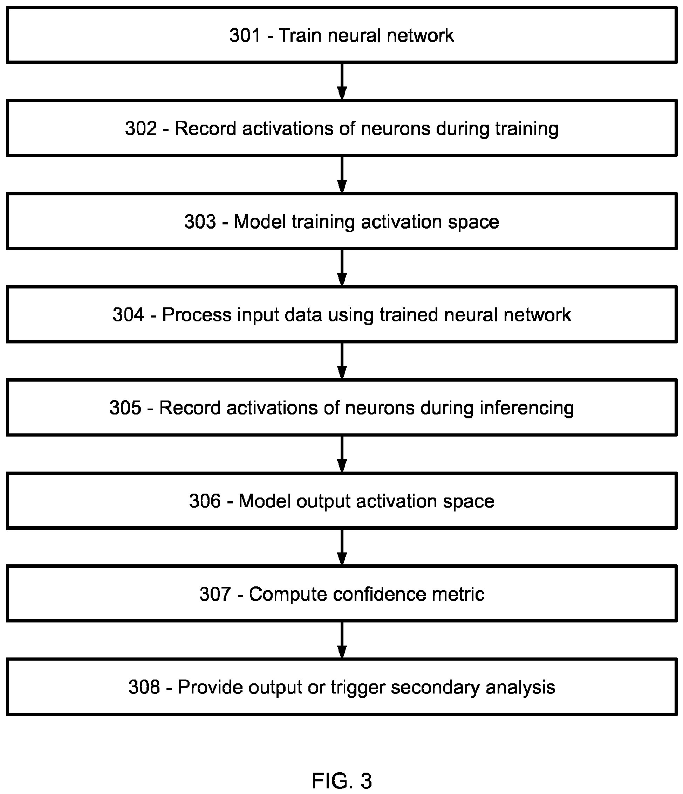

**FIG. 3** illustrates an exemplary process for computing a confidence metric associated with an artificial intelligence model. The process comprises training a model or neural network 301, recording activations of neurons associated with training 302, modeling training activation space 303, processing input data using the trained model 304, recording activations of neurons associated with inferencing 305, modeling output activation space 306, computing a confidence metric 307, and providing model output and/or triggering secondary analysis 308. The process steps described herein may be performed in association with a system such as that described in FIG. 1 and/or FIG. 2 above or in association with a different system. The process may comprise additional steps, fewer steps, and/or a different order of steps without departing from the scope of the invention as would be apparent to one of ordinary skill in the art.

In one embodiment, the software process 301 involves training a neural network. The software process 301 is designed to adjust the parameters of a neural network using training data. This is achieved by implementing various machine learning algorithms during the training process. The training data used may comprise at least a subset of obtained training data.

In operation, the software process 301 begins by receiving the training data. It then applies a chosen machine learning algorithm to the training data, adjusting the parameters of the neural network based on the difference between the output of the neural network and the desired output. This process is repeated iteratively until the output of the neural network aligns with the desired output, indicating that the neural network has been trained.

Alternative embodiments of the software process 301 may involve different machine learning algorithms or different methods of adjusting the parameters of the neural network. For example, the process could implement supervised learning algorithms, unsupervised learning algorithms, reinforcement learning algorithms, or a combination of these, depending on the specific requirements of the neural network and the nature of the training data. The process could also adjust the parameters of the neural network in different ways, such as by using gradient descent, stochastic gradient descent, mini-batch gradient descent, or other optimization algorithms, depending on the specific needs of the neural network and the prediction task.

In one embodiment, the software process 302 involves recording activations of neurons during the training of a neural network. The software process 302 is designed to capture and store the output values of neurons as the training data is parsed through the network. This neuron activation information can be used to understand the behavior of the neurons during the training process. The training activation space can be modeled to determine a statistical representation of the activation which can then be used to compute a confidence level when the trained model is applied to new data for prediction or inference purposes.

In operation, the software process step 302 comprises recording neuron activation associated with the training of the neural network. As the training data is parsed through the network, the output values of the neurons are recorded. These recorded activations may assume extrapolation to be out-of-distribution and interpolation (along the lines of the activation function definition) to be in-distribution data.

Alternative embodiments of the software process 302 may involve different methods of recording neuron activations or different ways of using the recorded activations. For example, the process could record neuron activations in different ways, such as by storing the activations in a database, providing the activations as a data stream, or visualizing the activations in a graphical user interface, depending on the specific requirements of the neural network. The process could also use the recorded activations in different ways, such as for model validation, model selection, hyperparameter tuning, or other tasks related to the training and operation of the neural network.

In one embodiment, the software process 303 involves modeling neuron activation space(s) that occurred during the training of a neural network. The software process 303 is designed to apply statistical methods to the recorded neuron activations. These statistics may include, for example, the minimum, maximum, or some distribution characteristics of the neuron activations.

In operation, the software process 303 begins by receiving the recorded neuron activations. It then applies statistical methods to these activations to compute the desired statistics. These statistics can provide insights into the behavior of the neurons during the training process, and can be used to evaluate the performance of the neural network, to identify potential issues or anomalies, and to optimize the training process.

Alternative embodiments of the software process 303 may involve different statistical methods or different ways of using the computed statistics. For example, the process could apply different statistical methods, such as mean, median, mode, variance, skewness, kurtosis, or other statistical characteristics, depending on the specific needs of the neural network. The process could also use the computed statistics in different ways, such as for model validation, model selection, hyperparameter tuning, or other tasks related to the training and operation of the neural network.

Process step 304 involves processing input data using the trained model or neural network to data that requires analysis, such as real-world data needing a prediction or inference. This step is performed after the model has been trained using a suitable training dataset and the confidence engine has been set up with the necessary neuron activation statistics.

During this process step, the input data is fed into the trained model, which then processes the data through its layers of neurons. Each neuron applies its activation function to the weighted sum of its inputs, producing an output value. These output values are propagated through the network until the final layer generates the model's prediction or inference.

As the input data passes through the trained model, the confidence engine 204 monitors the activation values of each neuron and compares them to the bounds stored in the lookup table. If any neuron's activation value falls outside its corresponding bounds, the confidence engine 204 flags it as an out-of-bound neuron. The confidence engine then aggregates the information about out-of-bound neurons to calculate an overall confidence metric for the model's prediction.

The specific method used to aggregate the out-of-bound neuron information can vary. One approach is to calculate the ratio of neurons whose activation values fall within their bounds to the total number of neurons in the network. Another method involves using the trained model's parameters, such as the weights, to establish a linear relationship between the neuron activations and the confidence of the final prediction.

Alternative steps to process step 304 may include preprocessing the input data before feeding it into the trained model. This can involve normalization, feature scaling, or other techniques to ensure the input data is in a suitable format for the model. Another alternative is to apply multiple trained models to the input data and combine their predictions using ensemble methods. This can help improve the robustness and accuracy of the predictions. As an alternative to that described above, various techniques could be applied to the neural activation profile to compute confidence without departing from the scope of the invention as would be apparent to one of ordinary skill in the art. Post-processing the model's predictions to refine the results is another option, which can include thresholding, filtering, or other techniques to improve the quality of the predictions based on domain-specific knowledge.

The choice of alternative steps or modifications to process step 304 depends on the specific requirements and characteristics of the application, as well as the nature of the input data and the desired output format. The goal is to ensure that the trained model is applied effectively to the input data, and that the confidence engine provides a reliable estimate of the prediction's confidence based on the neuron activation patterns observed during the model's application.

Process step 305 comprises recording neuron activation associated with inferencing being performed by the trained neural network. This step involves recording the neuron activations that are observed when the input data is parsed through the trained model or neural network. This recording may be done in the same manner as recording of neuron activation during training as described above in association with step 302.

Process step 306 comprises modeling the output activation space. This step involves modeling the neuron activation space that was observed during inferencing (e.g. when the trained neural network was applied to input data). This modeling may be done in the same manner as modeling of the training activation space as described above in association with step 303.

Process step 307 involves computing a confidence metric that indicates the reliability of the predictions made by the trained model or neural network. The confidence metric is calculated based on the modeled neuron activation spaces (e.g. activation statistics) collected during the training process and observed when the model is applied to process new data. At a high level, the confidence metric provides a measure of how well the model's predictions on new data align with the patterns learned during training. It does this by comparing the neuron activation values generated during the model's application to the activation statistics collected during training. The closer the match between these two sets of activation patterns, the higher the confidence in the model's predictions.

In detail, the confidence metric may be computed by a confidence engine (e.g. confidence engine 204), which monitors the activation values of each neuron as the input data is processed by the trained model. The confidence engine compares these activation values to the bounds stored in the lookup table, which represent the range of activation values observed for each neuron during training. If a significant proportion of the neurons generate activation values that fall within their respective bounds, it indicates that the input data is similar to the data used during training, and the model's predictions are likely to be reliable. Conversely, if many neurons produce activation values outside their bounds, it suggests that the input data differs from the training data, and the model's predictions may be less reliable.

The specific method used to calculate the confidence metric can vary. One approach is to compute the ratio of neurons whose activation values fall within their bounds to the total number of neurons in the network. This ratio provides a simple, intuitive measure of the overall confidence in the model's predictions. Another approach is to use the trained model's parameters, such as the weights, to establish a linear relationship between the neuron activations and the confidence of the final prediction. This method takes into account the relative importance of each neuron's activation in determining the final output, providing a more nuanced confidence estimate.

Alternative methods for computing the confidence metric include using statistical techniques, such as Kullback-Leibler divergence or Jensen-Shannon divergence, to measure the similarity between the distribution of neuron activations during training and those observed during the model's application. Another option is to employ Bayesian neural networks, which inherently provide uncertainty estimates for their predictions. The confidence metric can be derived from these uncertainty estimates.

The choice of method for computing the confidence metric depends on the specific requirements of the application, the complexity of the model, and the available computational resources. The goal is to provide a reliable estimate of the model's confidence in its predictions, which can be used to inform decision-making or to trigger additional actions, such as requesting human intervention or gathering more data. By incorporating a confidence metric, the overall system can become more robust, reliable, and trustworthy, as it provides a measure of the uncertainty associated with its predictions.

At 308, the process may comprise providing neural network output or triggering secondary analysis. The decision on whether to provide the neural network output or trigger secondary analysis may be based on the computed confidence metric. For example, when the confidence metric satisfies a threshold, the process may determine that the output is suitable for use and thus provide the output for use by another process and/or computing system. Alternatively, when the confidence metric indicates the threshold has not been satisfied the process may determine that the neural network output may not be suitable for output and may reject the model output, request another output from the trained model, apply a secondary inferencing model to the input data and/or output, and/or request intervention from an external source. In one aspect, when a confidence threshold is not satisfied, the process may further comprise recording the corresponding data for later use, such as for using the recorded data that failed to satisfy the threshold in updating training of the neural network and/or in training a new neural network thereby creating a feedback loop for model retraining/refinement.

### Hardware Architecture

Generally, the techniques disclosed herein may be implemented on hardware or a combination of software and hardware. For example, they may be implemented in an operating system kernel, in a separate user process, in a library package bound into network applications, on a specially constructed machine, on an application-specific integrated circuit (ASIC), or on a network interface card.

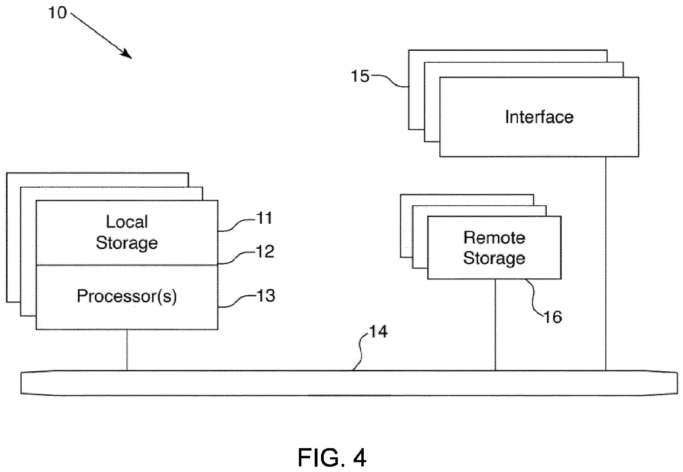

Software/hardware hybrid implementations of at least some of the embodiments disclosed herein may be implemented on a programmable network-resident machine (which should be understood to include intermittently connected network-aware machines) selectively activated or reconfigured by a computer program stored in memory. Such network devices may have multiple network interfaces that may be configured or designed to utilize different types of network communication protocols. A general architecture for some of these machines may be described herein in order to illustrate one or more exemplary means by which a given unit of functionality may be implemented. According to specific embodiments, at least some of the features or functionalities of the various embodiments disclosed herein may be implemented on one or more general-purpose computers associated with one or more networks, such as for example an end-user computer system, a client computer, a network server or other server system, a mobile computing device (e.g., tablet computing device, mobile phone, smartphone, laptop, or other appropriate computing device), a consumer electronic device, a music player, or any other suitable electronic device, router, switch, or other suitable device, or any combination thereof. In at least some embodiments, at least some of the features or functionalities of the various embodiments disclosed herein may be implemented in one or more virtualized computing environments (e.g., network computing clouds, virtual machines hosted on one or more physical computing machines, or other appropriate virtual environments). Any of the above mentioned systems, units, modules, engines, controllers, components or the like may be and/or comprise hardware and/or software as described herein. For example, the model evaluation system 103 and subcomponents thereof may be and/or comprise computing hardware and/or software as described herein in association with FIGS. 4-7. Furthermore, any of the above mentioned systems, units, modules, engines, controllers, components, interfaces or the like may use and/or comprise an application programming interface (API) for communicating with other systems units, modules, engines, controllers, components, interfaces or the like for obtaining and/or providing data or information.

Referring now to **FIG. 4****,** there is shown a block diagram depicting an exemplary computing device **10** suitable for implementing at least a portion of the features or functionalities disclosed herein. Computing device **10** may be, for example, any one of the computing machines listed in the previous paragraph, or indeed any other electronic device capable of executing software- or hardware-based instructions according to one or more programs stored in memory. Computing device **10** may be configured to communicate with a plurality of other computing devices, such as clients or servers, over communications networks such as a wide area network a metropolitan area network, a local area network, a wireless network, the Internet, or any other network, using known protocols for such communication, whether wireless or wired.

In one aspect, computing device **10** includes one or more central processing units (CPU) **12,** one or more interfaces **15,** and one or more busses **14** (such as a peripheral component interconnect (PCI) bus). When acting under the control of appropriate software or firmware, CPU **12** may be responsible for implementing specific functions associated with the functions of a specifically configured computing device or machine. For example, in at least one aspect, a computing device **10** may be configured or designed to function as a server system utilizing CPU **12,** local memory **11** and/or remote memory **16,** and interface(s) **15.** In at least one aspect, CPU **12** may be caused to perform one or more of the different types of functions and/or operations under the control of software modules or components, which for example, may include an operating system and any appropriate applications software, drivers, and the like.

CPU **12** may include one or more processors **13** such as, for example, a processor from one of the Intel, ARM, Qualcomm, and AMD families of microprocessors. In some embodiments, processors **13** may include specially designed hardware such as application-specific integrated circuits (ASICs), electrically erasable programmable read-only memories (EEPROMs), field-programmable gate arrays (FPGAs), and so forth, for controlling operations of computing device **10.** In a particular aspect, a local memory **11** (such as non-volatile random-access memory (RAM) and/or read-only memory (ROM), including for example one or more levels of cached memory) may also form part of CPU **12.** However, there are many different ways in which memory may be coupled to system **10.** Memory **11** may be used for a variety of purposes such as, for example, caching and/or storing data, programming instructions, and the like. It should be further appreciated that CPU **12** may be one of a variety of system-on-a-chip (SOC) type hardware that may include additional hardware such as memory or graphics processing chips, such as a QUALCOMM SNAPDRAGON^{™} or SAMSUNG EXYNOS^{™} CPU as are becoming increasingly common in the art, such as for use in mobile devices or integrated devices.

As used herein, the term "processor" is not limited merely to those integrated circuits referred to in the art as a processor, a mobile processor, or a microprocessor, but broadly refers to a microcontroller, a microcomputer, a programmable logic controller, an application-specific integrated circuit, and any other programmable circuit.

In one aspect, interfaces **15** are provided as network interface cards (NICs). Generally, NICs control the sending and receiving of data packets over a computer network; other types of interfaces **15** may for example support other peripherals used with computing device **10.** Among the interfaces that may be provided are Ethernet interfaces, frame relay interfaces, cable interfaces, DSL interfaces, token ring interfaces, graphics interfaces, and the like. In addition, various types of interfaces may be provided such as, for example, universal serial bus (USB), Serial, Ethernet, FIREWIRE^{™}, THUNDERBOLT^{™}, PCI, parallel, radio frequency (RF), BLUETOOTH^{™}, near-field communications (e.g., using near-field magnetics), 802.11 (WiFi), frame relay, TCP/IP, ISDN, fast Ethernet interfaces, Gigabit Ethernet interfaces, Serial ATA (SATA) or external SATA (ESATA) interfaces, high-definition multimedia interface (HDMI), digital visual interface (DVI), analog or digital audio interfaces, asynchronous transfer mode (ATM) interfaces, high-speed serial interface (HSSI) interfaces, Point of Sale (POS) interfaces, fiber data distributed interfaces (FDDIs), and the like. Generally, such interfaces 15 may include physical ports appropriate for communication with appropriate media. In some cases, they may also include an independent processor (such as a dedicated audio or video processor, as is common in the art for high-fidelity A/V hardware interfaces) and, in some instances, volatile and/or non-volatile memory (e.g., RAM).

Although the system shown in **FIG. 4** illustrates one specific architecture for a computing device **10** for implementing one or more of the embodiments described herein, it is by no means the only device architecture on which at least a portion of the features and techniques described herein may be implemented. For example, architectures having one or any number of processors **13** may be used, and such processors **13** may be present in a single device or distributed among any number of devices. In one aspect, single processor **13** handles communications as well as routing computations, while in other embodiments a separate dedicated communications processor may be provided. In various embodiments, different types of features or functionalities may be implemented in a system according to the aspect that includes a client device (such as a tablet device or smartphone running client software) and server systems (such as a server system described in more detail below).

Regardless of network device configuration, the system of an aspect may employ one or more memories or memory modules (such as, for example, remote memory block **16** and local memory **11)** configured to store data, program instructions for the general-purpose network operations, or other information relating to the functionality of the embodiments described herein (or any combinations of the above). Program instructions may control execution of or comprise an operating system and/or one or more applications, for example. Memory **16** or memories **11, 16** may also be configured to store data structures, configuration data, encryption data, historical system operations information, or any other specific or generic non-program information described herein.

Because such information and program instructions may be employed to implement one or more systems or methods described herein, at least some network device embodiments may include nontransitory machine-readable storage media, which, for example, may be configured or designed to store program instructions, state information, and the like for performing various operations described herein. Examples of such nontransitory machine- readable storage media include, but are not limited to, magnetic media such as hard disks, floppy disks, and magnetic tape; optical media such as CD-ROM disks; magneto-optical media such as optical disks, and hardware devices that are specially configured to store and perform program instructions, such as read-only memory devices (ROM), flash memory (as is common in mobile devices and integrated systems), solid state drives (SSD) and "hybrid SSD" storage drives that may combine physical components of solid state and hard disk drives in a single hardware device (as are becoming increasingly common in the art with regard to personal computers), memristor memory, random access memory (RAM), and the like. It should be appreciated that such storage means may be integral and non-removable (such as RAM hardware modules that may be soldered onto a motherboard or otherwise integrated into an electronic device), or they may be removable such as swappable flash memory modules (such as "thumb drives" or other removable media designed for rapidly exchanging physical storage devices), "hot-swappable" hard disk drives or solid state drives, removable optical storage discs, or other such removable media, and that such integral and removable storage media may be utilized interchangeably. Examples of program instructions include both object code, such as may be produced by a compiler, machine code, such as may be produced by an assembler or a linker, byte code, such as may be generated by for example a JAVA^{™} compiler and may be executed using a Java virtual machine or equivalent, or files containing higher level code that may be executed by the computer using an interpreter (for example, scripts written in Python, Perl, Ruby, Groovy, or any other scripting language).

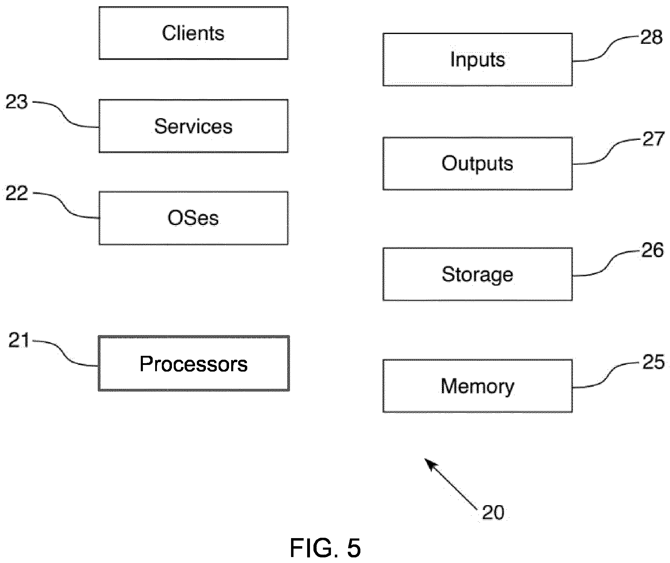

In some embodiments, systems may be implemented on a standalone computing system. Referring now to **FIG. 5****,** there is shown a block diagram depicting a typical exemplary architecture of one or more embodiments or components thereof on a standalone computing system. Computing device **20** includes processors **21** that may run software that carry out one or more functions or applications of embodiments, such as for example a client application. Processors **21** may carry out computing instructions under control of an operating system **22** such as, for example, a version of MICROSOFT WINDOWS^{™} operating system, APPLE macOS^{™} or iOS^{™} operating systems, some variety of the Linux operating system, ANDROID^{™} operating system, or the like. In many cases, one or more shared services **23** may be operable in system **20,** and may be useful for providing common services to client applications. Services **23** may for example be WINDOWS^{™} services, user-space common services in a Linux environment, or any other type of common service architecture used with operating system **21.** Input devices **28** may be of any type suitable for receiving user input, including for example a keyboard, touchscreen, microphone (for example, for voice input), mouse, touchpad, trackball, or any combination thereof. Output devices **27** may be of any type suitable for providing output to one or more users, whether remote or local to system **20,** and may include for example one or more screens for visual output, speakers, printers, or any combination thereof. Memory **25** may be random-access memory having any structure and architecture known in the art, for use by processors **21,** for example to run software. Storage devices **26** may be any magnetic, optical, mechanical, memristor, or electrical storage device for storage of data in digital form (such as those described above, referring to **FIG. 4****).** Examples of storage devices **26** include flash memory, magnetic hard drive, CD-ROM, and/or the like.

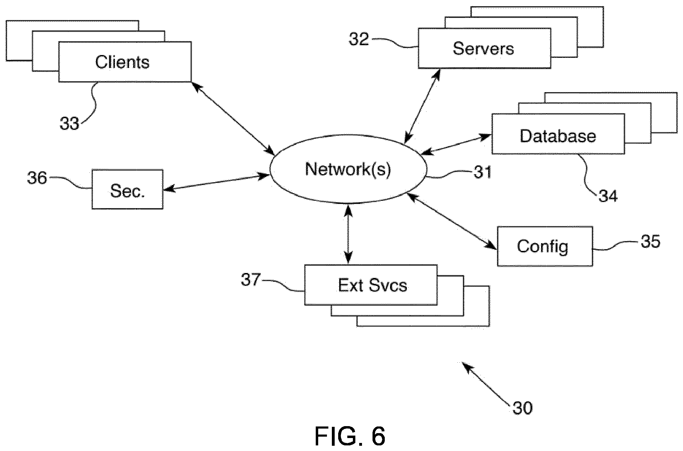

In some embodiments, systems may be implemented on a distributed computing network, such as one having any number of clients and/or servers. Referring now to **FIG. 6****,** there is shown a block diagram depicting an exemplary architecture **30** for implementing at least a portion of a system according to one aspect on a distributed computing network. According to the aspect, any number of clients **33** may be provided. Each client **33** may run software for implementing client-side portions of a system; clients may comprise a system **20** such as that illustrated in **FIG. 5****.** In addition, any number of servers **32** may be provided for handling requests received from one or more clients **33.** Clients **33** and servers **32** may communicate with one another via one or more electronic networks **31,** which may be in various embodiments any of the Internet, a wide area network, a mobile telephony network (such as CDMA or GSM cellular networks), a wireless network (such as WiFi, WiMAX, LTE, and so forth), or a local area network (or indeed any network topology known in the art; the aspect does not prefer any one network topology over any other). Networks **31** may be implemented using any known network protocols, including for example wired and/or wireless protocols.

In addition, in some embodiments, servers **32** may call external services **37** when needed to obtain additional information, or to refer to additional data concerning a particular call. Communications with external services **37** may take place, for example, via one or more networks **31.** In various embodiments, external services **37** may comprise web-enabled services or functionality related to or installed on the hardware device itself. For example, in one aspect where client applications are implemented on a smartphone or other electronic device, client applications may obtain information stored in a server system **32** in the cloud or on an external service **37** deployed on one or more of a particular enterprise's or user's premises.

In some embodiments, clients **33** or servers **32** (or both) may make use of one or more specialized services or appliances that may be deployed locally or remotely across one or more networks **31.** For example, one or more databases **34** may be used or referred to by one or more embodiments. It should be understood by one having ordinary skill in the art that databases **34** may be arranged in a wide variety of architectures and using a wide variety of data access and manipulation means. For example, in various embodiments one or more databases **34** may comprise a relational database system using a structured query language (SQL), while others may comprise an alternative data storage technology such as those referred to in the art as "NoSQL" (for example, HADOOP CASSANDRA^{™}, GOOGLE BIGTABLE^{™}, and so forth). In some embodiments, variant database architectures such as column-oriented databases, in-memory databases, clustered databases, distributed databases, or even flat file data repositories may be used according to the aspect. It will be appreciated by one having ordinary skill in the art that any combination of known or future database technologies may be used as appropriate, unless a specific database technology or a specific arrangement of components is specified for a particular aspect described herein. Moreover, it should be appreciated that the term "database" as used herein may refer to a physical database machine, a cluster of machines acting as a single database system, or a logical database within an overall database management system. Unless a specific meaning is specified for a given use of the term "database", it should be construed to mean any of these senses of the word, all of which are understood as a plain meaning of the term "database" by those having ordinary skill in the art.

Similarly, some embodiments may make use of one or more security systems **36** and configuration systems **35.** Security and configuration management are common information technology (IT) and web functions, and some amount of each are generally associated with any IT or web systems. It should be understood by one having ordinary skill in the art that any configuration or security subsystems known in the art now or in the future may be used in conjunction with embodiments without limitation, unless a specific security **36** or configuration system **35** or approach is specifically required by the description of any specific aspect.

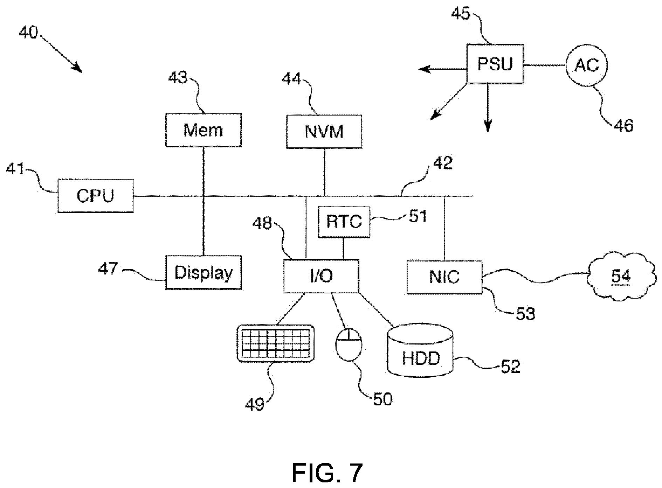

**FIG. 7** shows an exemplary overview of a computer system **40** as may be used in any of the various locations throughout the system. It is exemplary of any computer that may execute code to process data. Various modifications and changes may be made to computer system **40** without departing from the broader scope of the system and method disclosed herein. Central processor unit (CPU) **41** is connected to bus **42,** to which bus is also connected memory **43,** nonvolatile memory **44,** display **47,** input/output (I/O) unit **48,** and network interface card (NIC) **53.** I/O unit **48** may, typically, be connected to keyboard **49,** pointing device **50,** hard disk **52,** and real-time clock **51.** NIC **53** connects to network **54,** which may be the Internet or a local network, which local network may or may not have connections to the Internet. Also shown as part of system **40** is power supply unit **45** connected, in this example, to a main alternating current (AC) supply **46.** Not shown are batteries that could be present, and many other devices and modifications that are well known but are not applicable to the specific novel functions of the current system and method disclosed herein. It should be appreciated that some or all components illustrated may be combined, such as in various integrated applications, for example Qualcomm or Samsung system-on-a-chip (SOC) devices, or whenever it may be appropriate to combine multiple capabilities or functions into a single hardware device (for instance, in mobile devices such as smartphones, video game consoles, in-vehicle computer systems such as navigation or multimedia systems in automobiles, or other integrated hardware devices).

In various embodiments, functionality for implementing systems or methods of various embodiments may be distributed among any number of client and/or server components. For example, various software modules may be implemented for performing various functions in connection with the system of any particular aspect, and such modules may be variously implemented to run on server and/or client components.

The skilled person will be aware of a range of possible modifications of the various embodiments described above. Accordingly, the present invention is defined by the claims and their equivalents.

### Additional Considerations

As used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

Some embodiments may be described using the expression "coupled" and "connected" along with their derivatives. For example, some embodiments may be described using the term "coupled" to indicate that two or more elements are in direct physical or electrical contact. The term "coupled," however, may also mean that two or more elements are not in direct contact with each other, but yet still co-operate or interact with each other. The embodiments are not limited in this context.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and Bis false (or not present), A is false ( or not present) and Bis true ( or present), and both A and B are true ( or present).

In addition, use of the "a" or "an" are employed to describe elements and components of the embodiments herein. This is done merely for convenience and to give a general sense of the invention. This description should be read to include one or at least one and the singular also includes the plural unless it is obvious that it is meant otherwise.

Upon reading this disclosure, those of skill in the art will appreciate still additional alternative structural and functional designs for a system and/or a process associated with the disclosed principles herein. Thus, while particular embodiments and applications have been illustrated and described, it is to be understood that the disclosed embodiments are not limited to the precise construction and components disclosed herein. Various apparent modifications, changes and variations may be made in the arrangement, operation and details of the method and apparatus disclosed herein without departing from the spirit and scope defined in the appended claims.

## Claims

1. A computing system for evaluating model performance based on activation space parameters, the computing system comprising:
at least one computing processor; and
memory comprising instructions that, when executed by the at least one computing processor, enable the computing system to:
train a neural network using a training data set;
record a training activation space during the training wherein data associated with a plurality of neurons is obtained and recorded;
model the training activation space to define training activation space parameters, wherein the training activation space parameters comprise a statistical representation of the training activation space;
process input data using the trained neural network to generate model output associated with model inferencing;
record an output activation space associated with the model output wherein data associated with a plurality of neurons is obtained and recorded;
model the output activation space to define output activation space parameters, wherein the output activation space parameters comprise a statistical representation of the output activation space;
compare the output activation space with the training activation space to determine a likelihood of achieving the output activation space parameters based on the recorded training activation space parameters;
compute a confidence metric based on the comparing of the output activation space with the training activation space; and
provide an output associated with the model inferencing when the confidence metric satisfies a threshold and triggering a secondary processing of the input data and/or model output when the confidence metric indicates the threshold has not been satisfied.

2. The computing system according to claim 1, wherein recording a training activation space during the training comprises recording activation data associated with each neuron of the neural network.

3. The computing system according to claim 1 or 2, wherein recording an output activation space comprises recording activation data associated with each neuron of the neural network.

4. The computing system according to any of the preceding claims, wherein the statistical representation of the training activation space comprises a distribution type indicator, an average, a minimum, a maximum, a range, a variance, and/or a standard deviation.

5. The computing system according to any of the preceding claims, wherein the statistical representation of the output activation space comprises a distribution type indicator, an average, a minimum, a maximum, a range, a variance, and/or a standard deviation.

6. The computing system according to any of the preceding claims, wherein modeling the training activation space parameters is based on an activation function used for each of the plurality of neurons.

7. The computing system according to any of the preceding claims, wherein modeling the output activation space parameters is based on an activation function used for each of the plurality of neurons, and/or the training activation space parameters define expected activation space bounds.

8. The computing system according to any of the preceding claims, wherein triggering a secondary processing of the input data and/or model output comprises rejecting the model output, requesting another output from the model, applying a secondary inferencing model, and/or requesting intervention from an external source.

9. The computing system according to any of the preceding claims, further comprising recording the data that failed to satisfy the threshold.

10. A computer implemented method for evaluating model performance based on activation space parameters, the computer implemented method comprising:
training a neural network using a training data set;
recording a training activation space during the training wherein data associated with a plurality of neurons is obtained and recorded;
modeling the training activation space to define training activation space parameters, wherein the training activation space parameters comprise a statistical representation of the training activation space;
processing input data using the trained neural network to generate model output associated with model inferencing;
recording an output activation space associated with the model output wherein data associated with a plurality of neurons is obtained and recorded;
modeling the output activation space to define output activation space parameters, wherein the output activation space parameters comprise a statistical representation of the output activation space;
comparing the output activation space with the training activation space to determine a likelihood of achieving the output activation space parameters based on the recorded training activation space parameters;
computing a confidence metric based on the comparing of the output activation space with the training activation space; and
providing an output associated with the model inferencing when the confidence metric satisfies a threshold and triggering a secondary processing of the input data and/or model output when the confidence metric indicates the threshold has not been satisfied.

11. The computer implemented method according to claim 10, wherein recording a training activation space or recording an output activation space comprises recording activation data associated with each neuron of the neural network.

12. The computer implemented method according to claim 10 or 11, wherein the statistical representation of the training activation space or the output activation space comprises a distribution type indicator, an average, a minimum, a maximum, a range, a variance, and/or a standard deviation.

13. The computer implemented method according to any of claims 10 to 12, wherein modeling the training activation space parameters or the output activation space is based on an activation function used for each of the plurality of neurons.

14. The computer implemented method according to any of claims 10 to 13, wherein the training activation space parameters define expected activation space bounds.

15. A non-transitory computer readable medium comprising instructions that when executed by a processor enable the processor to:
train a neural network using a training data set;
record a training activation space during the training wherein data associated with a plurality of neurons is obtained and recorded;
model the training activation space to define training activation space parameters, wherein the training activation space parameters comprise a statistical representation of the training activation space;
processing input data using the trained neural network to generate model output associated with model inferencing;
record an output activation space associated with the model output wherein data associated with a plurality of neurons is obtained and recorded;
model the output activation space to define output activation space parameters, wherein the output activation space parameters comprise a statistical representation of the output activation space;
compare the output activation space with the training activation space to determine a likelihood of achieving the output activation space parameters based on the recorded training activation space parameters;
computing a confidence metric based on the comparing of the output activation space with the training activation space; and
providing an output associated with the model inferencing when the confidence metric satisfies a threshold, and triggering a secondary processing of the input data and/or model output when the confidence metric indicates the threshold has not been satisfied.
